# EUROPEAN PATENT SPECIFICATION

(11) **EP 3 216 305 B1**
(45) Date of publication and mention of the grant of the patent: **12.01.2022**
(21) Application number: 15857338.6
(22) Date of filing: 09.11.2015
(51) Int. Cl.: H04W 4/06, H04W 12/08, H04L 29/12

(54) **METHODS AND APPARATUS FOR TRANSMITTING GROUP MESSAGE TO USER EQUIPMENT**
VERFAHREN UND VORRICHTUNGEN ZUR ÜBERTRAGUNG VON GRUPPENNACHRICHTEN AN EINEM ENDGERÄT
PROCÉDÉS ET APPAREILS POUR LA TRANSMISSION D'UN MESSAGE DE GROUPE À UN ÉQUIPEMENT UTILISATEUR

(30) Priority: 07.11.2014 US 201462076863 P; 01.12.2014 US 201462086057 P; 13.03.2015 US 201562132815 P; 06.07.2015 US 201562188968 P; 20.08.2015 US 201562207619 P; 04.11.2015 KR 20150154748
(43) Date of publication of application: 13.09.2017
(73) Proprietor: Samsung Electronics Co., Ltd., Gyeonggi-do 16677 (KR)
(72) Inventor: WON, Sung Hwan, Seoul 04410 (KR); KWAK, Youngwoo, Suwon-si Gyeonggi-do 16514 (KR); KIM, Donghan, Osan-si Gyeonggi-do 18107 (KR); KIM, Sunghoon, Suwon-si Gyeonggi-do 16509 (KR); OH, Jinyoung, Seoul 06298 (KR); CHOI, Seunghoon, Suwon-si Gyeonggi-do 16519 (KR)
(74) Representative: HGF
(86) International application number: PCT/KR2015/011987
(87) International publication number: WO 2016/072814

(56) References cited:
- US-A1- 2013 007 287
- US-A1- 2013 242 738
- "3rd Generation Partnership Project; Technical Specification Group Services and System Aspects; Group based Enhancements; (Release 13)", 3GPP STANDARD; 3GPP TR 23.769, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.3.1, 3 November 2014 (2014-11-03), pages 1-33, XP050926792, [retrieved on 2014-11-03]
- "3rd Generation Partnership Project; Technical Specification Group Core Network and Terminals; Group Communication System Enablers for LTE (GCSE_LTE); MB2 Reference Point; Stage 3 (Release 12)", 3GPP STANDARD; 3GPP TS 29.468, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG3, no. V12.0.1, 29 October 2014 (2014-10-29), pages 1-28, XP050926781, [retrieved on 2014-10-29]
- HUAWEI ET AL.: 'Solutions on Message delivery to a group of devices' S 2-143232 , SA WG2 MEETING #105 08 October 2014, XP050890921
- ZTE ET AL.: 'Selection of method for delivery of Group Message to group of devices' S 2-143017 , SA WG2 MEETING #105 07 October 2014, XP050890853
- CISCO SYSTEMS INC.: 'Solution for key issue 5.1' S 2-142973 , SA WG2 MEETING #105 08 October 2014, XP050890927
- INTERDIGITAL: 'Solution for key issue on SCS/AS Notification/Request for Group PSM Usage' S 2-143328 , SA WG2 MEETING #105 08 October 2014, XP050891153
- ZTE ET AL: "Selection of method for delivery of Group Message to group of devices", 3GPP DRAFT; S2-143017_GROUP MESSAGE DELIVERY METHOD SELECTION (FINAL), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. SA WG2, no. Sapporo, Japan; 20141013 - 20141017 7 October 2014 (2014-10-07), XP050890853, Retrieved from the Internet: URL:http://www.3gpp.org/ftp/tsg_sa/WG2_Arc h/TSGS2_105_Sapporo/Docs/ [retrieved on 2014-10-07]

## Description

### Technical Field

The present disclosure relates to a service capability server/application server, SCS/AS, for a wireless network and method thereof and to an entity that implements a service capability exposure function, SCEF, for a wireless network and method thereof.

### Background Art

In order to satisfy a wireless data traffic demand, which is on an increasing trend, after 4th generation (4G) communication system commercialization, an effort for developing an improved 5th generation (5G) communication system or pre-5G communication system is being made. For this reason, the 5G communication system or pre-5G communication system has been referred to as a communication system beyond a 4G network or a system post long term evolution (LTE) system. For achieving a high data transmission rate, the 5G communication system considers an implement in a microwave (mmWave) band (e.g., 60GHz band). In order to ease a path loss of a radio wave and increase a transmission distance in the microwave band, in the 5G communication system, technologies such as a beamforming, a massive multiple input multiple output (MIMO), a full dimensional MIMO (FD-MIMO), an array antenna, an analog beam-forming, a large scale antenna have been discussed. Further, for improving the network of the system, in the 5G communication system, technologies such as an evolved small cell, an advanced small cell, a cloud radio access network (cloud RAN), an ultra-dense network), a device to device (D2D) communication, a wireless backhaul, a moving network, a cooperative communication, a coordinated multi-points (CoMP), and a reception interference cancellation have been developed. In addition, in the 5G system, a Hybrid FSK and QAM modulation (FQAM) and a sliding window superposition coding (SWSC) which are in an advanced coding modulation (ACM) scheme, and a filter bank multi carrier (FBMC), a non-orthogonal multiple access (NOMA) and a sparse code multiple access (SCMA) which are advanced access technologies have been developed.

Meanwhile, Internet has been evolved from a human-centered network in which human generates and consumes information to an Internet of things (IoT) which transmits and receives, and then processes information between distributed components such as things. A big data processing technology through a connection to a cloud server has emerged as an Internet of everything (IoE) technology combined to the IoT technology. To implement the IoT, technology elements such as a sensing technology, wired/wireless communication and network infra, a service interface technology, and a security technology are required so that a technology such as a sensor network for connecting between things, a machine to machine (M2M), and machine type communication (MTC) has been recently studied. In the IoT environment, an Internet technology (IT) service for collecting and analyzing data generated in the connected things to generate the new sense of value to a human's life may be provided. The IoT may be applied to a field such as a smart home, a smart building, a smart city, a smart car or a connected car, a smart grid, a health care, a smart appliance, and an advanced medical service, through convergence and compound between an information technology (IT) and various industries.

Accordingly, various attempts for applying the 5G communication system to an IoT network are made. For example, a 5G communication technology such as a sensor network, an M2M communication, MTC is implemented by a technique such as beaming forming, an MIMO, and an array antenna. An example of the 5G technology and IoT technology fusion may be that a cloud RAN is applied as the big data processing technology as described above.

The above information is presented as background information only to assist with an understanding of the present disclosure. No determination has been made, and no assertion is made, as to whether any of the above might be applicable as prior art with regard to the present disclosure.

Examples of the state of the art are as follows: (1) "3rd Generation Partnership Project; Technical Specification Group Services and System Aspects; Group based Enhancements; (Release 13)", 3GPP STANDARD; 3GPP TR 23.769, 3RD GENERATION PARTNERSHIP PROJECT (3GPP), MOBILE COMPETENCE CENTRE; 650 ROUTE DES LUCIOLES; F-06921 SOPHIA-ANTIPOLIS CEDEX; FRANCE, vol. SA WG2, no. V0.3.1, 3 November 2014 (2014-11-03), pages 1-33, XP050926792; (2) U.S. Patent Application Publication No. 2013/007287; and (3) "3rd Generation Partnership Project; Technical Specification Group Core Network and Terminals; Group Communication System Enablers for LTE (GCSE_LTE); MB2 Reference Point; Stage 3 (Release 12)", 3GPP STANDARD; 3GPP TS 29.468, 3RD GENERATION PARTNERSHIP PROJECT (3GPP), MOBILE COMPETENCE CENTRE; 650 ROUTE DES LUCIOLES; F-06921 SOPHIA-ANTIPOLIS CEDEX; FRANCE, vol. CT WG3, no. V12.0.1, 29 October 2014 (2014-10-29), pages 1-28, XP050926781. A group communication function for delivering group communication messages in communication networks is described in WO 2016/073533 A1 corresponding to EP 3216238 A1. SA WG2 Meeting #105 S2-143017 (ZTE, AT&T, KPN, Sierra Wireless; 13-17 October 2014, Sapporo, Japan) relates to selection of method for delivery of Group Message to group of devices.

### Disclosure of Invention

### Technical Problem

However, when a message is transmitted to multiple user equipments (UEs), a broadcasting resource may be used by considering an efficiency of a resource use. Especially, a group message can be transmitted using a multimedia broadcast multicast service (MBMS) service. In this event, the UE should acquire MBMS related information and a network needs a method and an apparatus for performing this operation since an MBMS bearer should be activated.

### Solution to Problem

Aspects of certain embodiments of the present disclosure are to address at least the above-mentioned problems and/or disadvantages and to provide at least the advantages described below.

The invention is defined by the appended claims.

In accordance with an aspect of the present disclosure, there is provided a method according to claim 1.

In accordance with another aspect of the present disclosure, there is provided an apparatus according to claim 3.

In accordance with another aspect of the present disclosure, there is provided a method according to claim 8.

In accordance with another aspect of the present disclosure, there is provided an apparatus according to claim 13.

### Advantageous Effects of Invention

In a method and an apparatus according to certain embodiments of the present disclosure, a network can transmit a group message efficiently using resources by applying an MBMS service to a UE.

Other aspects, advantages, and salient features of the disclosure will become apparent to those skilled in the art from the following detailed description, which, taken in conjunction with the annexed drawings, discloses various embodiments of the present disclosure.

### Brief Description of Drawings

The above and other aspects, features, and advantages of certain embodiments of the present disclosure will be more apparent from the following description taken in conjunction with the accompanying drawings, in which:
FIG. 73 is a view illustrating a network structure according to an embodiment of the present disclosure;
FIG. 74 is a view illustrating a method of previously sharing a multimedia broadcast multicast service (MBMS) group identifier to be received by a UE with a network when the network transmits a message to multiple UEs using an MBMS service according to an embodiment of the present disclosure;
FIGS. 75A and 75B are views illustrating a method of activating an MBMS bearer for transmitting a group message and transmitting the group message transmission scheme according to an embodiment of the present disclosure; and
FIG. 76 is a block diagram illustrating an internal structure of an object according to an embodiment of the present disclosure.

Throughout the drawings, it should be noted that like reference numbers are used to depict the same or similar elements, features, and structures.

### Mode for the Invention

The following description with reference to the accompanying drawings is provided to assist in a comprehensive understanding of various embodiments of the present disclosure. It includes various specific details to assist in that understanding but these are to be regarded as merely exemplary. Accordingly, those of ordinary skill in the art will recognize that various changes and modifications of the various embodiments described herein can be made. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure.

It is to be understood that the singular forms "a," "an," and "the" include plural referents unless the context clearly dictates otherwise. Thus, for example, reference to "a component surface" includes reference to one or more of such surfaces.

Further, the detailed description of embodiments of the present disclosure is made mainly based on a wireless communication system based on orthogonal frequency division multiplexing (OFDM), particularly 3rd Generation Partnership Project (3GPP) evolved universal mobile telecommunications system (UMTS) terrestrial radio access (EUTRA) standard, but the subject matter of the present disclosure can be applied to other communication systems having a similar technical background and channel form after a little modification without departing from the scope of the present disclosure and the above can be determined by those skilled in the art.

The advantages and features of the present disclosure and ways to achieve them will be apparent by making reference to various embodiments as described below in detail in conjunction with the accompanying drawings. However, the present disclosure is not limited to the embodiments set forth below, but may be implemented in various different forms. Throughout the specification, the same or like reference numerals designate the same or like elements.

Here, it will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operations to be performed on the computer or other programmable apparatus to produce a computer implemented process such that the instructions that execute on the computer or other programmable apparatus provide operations for implementing the functions specified in the flowchart block or blocks.

And each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the "unit" or "module" refers to a software element or a hardware element, such as a field programmable gate array (FPGA) or an application specific integrated circuit (ASIC), which performs a predetermined function. However, the "unit" or "module" does not always have a meaning limited to software or hardware. The "unit" or "module" may be constructed either to be stored in an addressable storage medium or to execute one or more processors. Therefore, the "unit" or "module" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" or "module" may be either combined into a smaller number of elements, "unit", or "module" or divided into a larger number of elements, "unit", or "module". Moreover, the elements and "units" or "modules" may be implemented to reproduce one or more central processing units (CPUs) within a device or a security multimedia card.

Hereinafter, various embodiments of the present disclosure will be described with reference to the accompanying drawings. It should be noted that the same elements are designated by the same reference numerals, if possible, in the accompanying drawings. Further, a detailed description of known functions and configurations which may make the subject matter of the present disclosure unclear will be omitted.

Further, although the following description of embodiments of the present disclosure will be directed to a radio access network (RAN) based on the 3GPP standard, and LTE and evolved packet core (EPC) that are core networks, it can be understood by those skilled in the art that the main gist of the present disclosure may also be applied to any other communication system having the similar technical background and channel format, with a slight modification, without substantially departing from the scope of the present disclosure.

Those skilled in the art can appreciate that it is possible to implement the present disclosure in other particular forms without changing the technical idea or the essential features of the present disclosure. Accordingly, it should be understood that the embodiments described herein are merely illustrative and are not limitative in all aspects.

All or some of the matters illustrated in the embodiments are intended to help the understanding of the present disclosure by specifically showing embodiments of the present disclosure. Accordingly, the details of the matters can be considered the representation of a part of the method and apparatus proposed in the present disclosure. That is, a semantic approach to the matters illustrated in the embodiments may be preferred, rather than a syntactic approach. In other words, the embodiments of the present disclosure shown and described in the specification and the drawings are merely particular examples presented in order to easily explain the technical details of the present disclosure and to help the understanding of the present disclosure, and are not intended to limit the scope of the present disclosure. That is, it will be apparent to those skilled in the art that different modifications and changes may be made based on the technical idea of the present disclosure.

Multiple pieces of UE, referred to as mobile station or UE) can use a broadcasting resource considering the efficiency of resource usage, particularly when transmitting a message to the UE belonging to a certain group. For the message delivery using a broadcast resource (particularly, according to the 3GPP standards, message delivery through MBMS transmission), a UE needs to acquire MBMS-related information (MBMS service description), and a network needs to activate an MBMS bearer. The present disclosure sets forth a method of acquiring MBMS related information by UE and activating an MBMS bearer by a network.

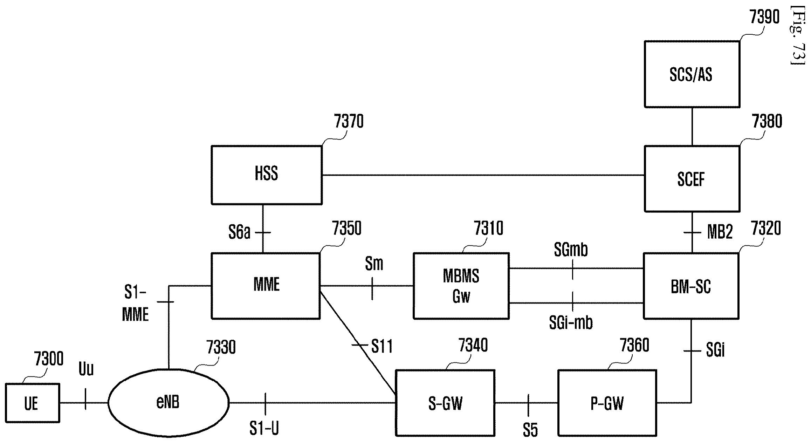

FIG. 73 illustrates a network structure according to an embodiment of the present disclosure. Referring to FIG. 73, as illustrated above, a radio access network comprises a next generation BS (referred to as evolved node B, BS, E-UTRAN, RAN node, and the like, hereinafter, eNB) 7330, a mobility management entity (MME) 7350, and a serving-gateway (S-GW) 7340. UE 7300 is connected to an external network through the eNB, the S-GW 7340, and the P-GW (packet data network (PDN)-gateway) 7360. The UE 7300 creates a packet data network (hereinafter, PDN) connection in order to transmit/receive data through the P-GW 7360, and a PDN connection is available through one or more evolved packet system (EPS) bearers.

The eNB 7330, the RAN node, corresponds to an RNC of a UTRAN system and a BSC of a GERAN system. The eNB 7330 is connected to the UE 7300 through a radio channel (Uu interface) and performs a similar role as the existing RNC/BSC. In LTE, since all the user traffic including a real-time service such as VoIP through Internet Protocol is serviced through a shared channel, a device which collects state information of UEs 7300 for scheduling is required and the eNB 7330 is responsible for this task.

The S-GW 7340 is a device for providing a data bearer, and creates or eliminates a data bearer according to the control of an MME 7350. The MME 7350, a device responsible for various control functions, may be connected to a plurality of eNBs 7330. A home subscriber server (HSS) 7370, the database of the network, stores key information for authorization of each UE 7300 and a profile of a subscriber.

At this time, when providing an MBMS service to UE 7300, a broadcasting/multicast service center (BM-SC) 7320 performs an authorization verification and a service start, and performs scheduling and transmission considering service quality for a MBMS content. The BM-SC 7320 may transmit an access broadcasting content through LTE network and may interwork with an external content provider to transmit the broadcasting content. The BM-SC 7320 is connected with the MBMS gateway (MBMS-GS) 7310 through the SGmb interface for control message transmission and connected through the SGi-mb interface for content (user traffic) transmission. The MBMS-GS 7310 transmits the content to the eNB 7330 using an IP multicast transmission scheme. The MBMS-GS 7310 is connected with the MME 7350 for control message transmission regarding a session and connected through an Ml interface for the content transmission to the eNB 7330.

Service capability exposure function (hereinafter, SCEF) 7380, which is a function for safely exposes 3GPP network to an external server, receives a message from an external server (SCS/AS, hereinafter, SCS/AS) and performs a task such as communicating with a 3GPP network object including the HSS 7370 and BM-SC 7320 etc., in order to control a UE 7300 group. In the present specification, the service capability exposure function (SCEF) may be refer to a machine type communication in-terworking function (hereinafter, MTC-IWF) and the SCEF above. The SCS/AS 7390 signifies an external server out of the 3GPP network. However, even when the SCS/AS 7390 is out of the 3GPP network, it is obvious that the present embodiment may be applied thereto. The SCS/AS 7390 may signify the MTC server.

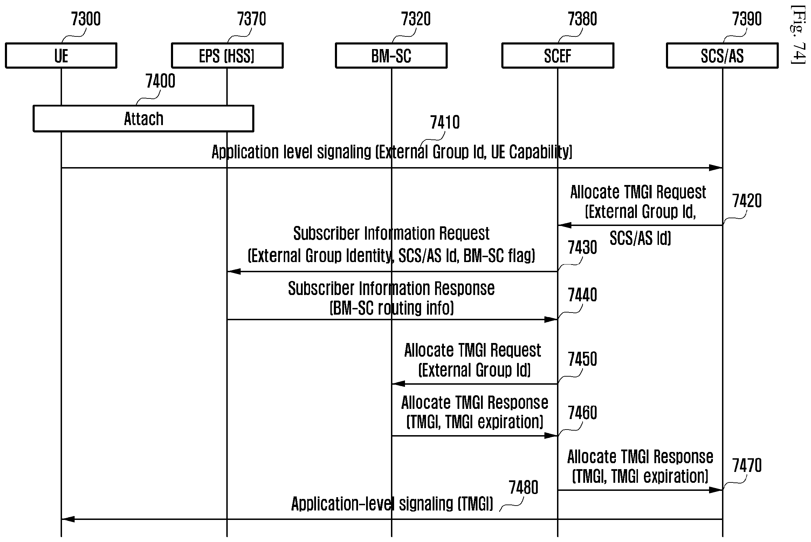

FIG. 74 illustrates a method for pre-sharing MBMS related information to be received by UE 7300 with a network, when the network transmits a message to multiple pieces of UE using MBMS service according to an embodiment of the present disclosure.

Referring to FIG. 74, in operation 7400, UE 7300 can acquire PDN connectivity through an attach stage. Alternatively, the UE may acquire the PDN connectivity using other methods. For example, the UE may acquire the PDN connectivity through Wi-Fi. In operation 7410, the SCS/AS 7390 acquires an identifier of a group in which the UE 7300 is included (hereinafter, an external group ID), together with, optionally, a position of the UE (cell identifier and/or MBMS service area identifier) and/or information on the UE capability through the UE 7300 and application level signaling (referred to as application signaling). The SCS/AS 7390 which identifies the support of the MBMS by the UE capability of one or more pieces of UE 7300 and identifies that the concentration of the UEs 7300 is significant enough for the message transmitted through MBMS transmission to a certain area to be efficient, may determine to perform to transmit the message through the MBMS transmission to the UE 7300 belonging to the corresponding group. Accordingly, allocation of a temporary mobile group identifier (TMGI) used during the MBMS transmission is required in the operation hereinafter. In operation 7420, the SCS/AS 7390 transmits a message requesting for TMGI allocation (allocate TMGI request message). If pre-allocated TMGI is provided, the SCS/AS 7390 may use the pre-allocated TMGI (in this case, in an example not falling under the claims, operations 7420 to 7470 may not be required to be performed). The SCS/AS 7390 may perform a domain name system (DNS) query using an external group ID or use preconfigured information in order to determine Internet Protocol (IP) address and/or a port number of the SCEF 7380 to which the allocate TMGI request message is transmitted. The SCS/ AS 7390 may store the external group ID, the IP address of the SCEF 7380, and/or the port number. The allocate TMGI request message may include the external group ID, priority information, and/or an SCS/AS identifier (SCS/AS ID). The priority information may be used to indicate the level of importance of a corresponding external group, and the SCEF 7380 may first process the TMGI allocation request with regard to the external group having a high priority. The SCEF 7380 may perform an authorization process using the SCS/AS ID. Said authorization process may include a process for determining whether the SCS/AS 7390 indicated by the SCS/AS ID is qualified to request the TMGI. In addition, an external group ID may be used in the authorization process. The authorization process may include a process to determine whether the group indicated by the external group ID is qualified to be allocated for TMGI.

The authorization process may include a process to determine the qualification of the corresponding entity which can be identified by the SCS/AS IS and/or the qualification of the corresponding group which can be identified by the external group ID. In addition, the HSS 7370 and/or a group management server may be involved in the authorization process. In more detail, the SCEF 7380 may transmit information necessary for the authorization process (SCS/AS ID and/or external group ID) to the HSS 7370 and/or the group management server. The HSS 7370 and/or the group management server which received the information may determine whether the corresponding SCS/ AS 7390 and/or the corresponding external group are qualified to request the TMGI.

In operation 7430, SCEF 7380 transmits a subscriber information request message and transmits the external group ID, SCS/AS ID, and/or a BM-SC flag, to the HSS 7370. The BM-SC flag may be used to indicate that the subscriber information request message is a message for requesting routing information (for example, BM-SC identifier and BM-SC IP address) on the BM-SC 7320. If a new message for requesting the routing information of BM-SC is defined, the BM-SC flag may not be included.

Next, in operation 7440, the HSS 7370 may transmit, to the SCEF 7380, the BM-SC routing information included in a subscriber information response message as a response to the subscriber information request message

In addition to the method of directly acquiring the BM-SC routing information through the HSS 7370 described above, the SCEF 7380 may determine the existence of the connectivity with the BM-SC 7320 on the basis of serving PLMN information of the UE 7300 belonging to the corresponding external group. The method of acquiring the serving network information by the SCEF 7380 may correspond to at least one of the followings:

First, the UE 7300 may provide serving network information to the SCS/AS 7390, and the SCS/AS 7390 may transmit the serving network information to the SCEF through the this operation.

Second, the SCEF 7380 may query the serving network information of the corresponding external group to the HSS 7370 and/or the group management server. For example, the HSS 7370 acquired the external group ID from the SCEF 7380 through operation 7430 may transmit, to the SCEF 7380 through operation 7440, information of the network in which the UEs 7300 corresponding to the external group ID and/or most of the UEs 7300 corresponding to the external group ID are served.

Third, the serving network information may be acquired using mapping information between the serving network and the external group ID, preconfigured in the SCEF 7380.

The SCEF 7380 may determine the existence of capability in usage of an MB2 interface which is the interface in the BM-SC 7320, the SCEF 7380, and the BM-SC 7320 associated with the corresponding network (PLMN), on the basis of the serving network information. For example, the SCEF 7380 may use mapping information between the serving network and the BM-SC routing information, preconfigured in the SCEF 7380.

In operation 7450, the SCEF 7380 may request TMGI allocation from the BM-SC 7320. At this time, the allocate TMGI request message may transmit the desired number of TMGI for allocation, the external group ID, the SCS/AS ID and/or priority information. The BM-SC 7320 may perform the authorization process for TMGI allocation. The authorization process may be performed associated with the corresponding SCEF 7380, the PLMN to which the corresponding SCEF 7380 belonging, the external group and/or the SCS/AS.

If the authorization process is successful, in operation 7460, the BM-SC 7320 may transmit the allocate TMGI response message including a set of at least one TMGI and/or TMGI expiration information corresponding to the TMGI as the response to the allocate TMGI request message. At this time, the external group ID and/or the priority information having been received may be considered. As the level of the priority is higher, the expiration period of the TMGI may be longer. On the basis of information received from the BM-SC 7320, the SCEF 7380 may store the set of the BM-SC routing information, one or more external group IDs corresponding to the BM-SC routing information, and mapping information between the TMGI.

In operation 7470, the SCEF 7380 may transmit the TMGI and/or TMGI expiration information received from the BM-SC 7320.

In operation 7480, the SCS/AS 7390 may transmit, to the UE 7300 through application level signaling, MBMS related information including the TMGI, service starting time, and/or service ending time. The SCS/AS 7390 may transmit the external group ID through the application level signaling. Accordingly, when the UE 7300 belongs to various external groups, the UE 7300 may find out the relationship between the external group ID and the TMGI. From that on, the UE 7300 may monitor an MBMS related channel when necessary and may receive data transmitted to the MBMS related channel when the corresponding TMGI is detected. The SCS/AS 7390 may transmit MBMS related information only to the UE 7300 positioned in a certain location. To this end, the SCS/AS 7390 may require information associated with the position of the UE 7300. The SCS/AS 7390 may acquire the position information of the US 7300 through various methods such as application level signaling.

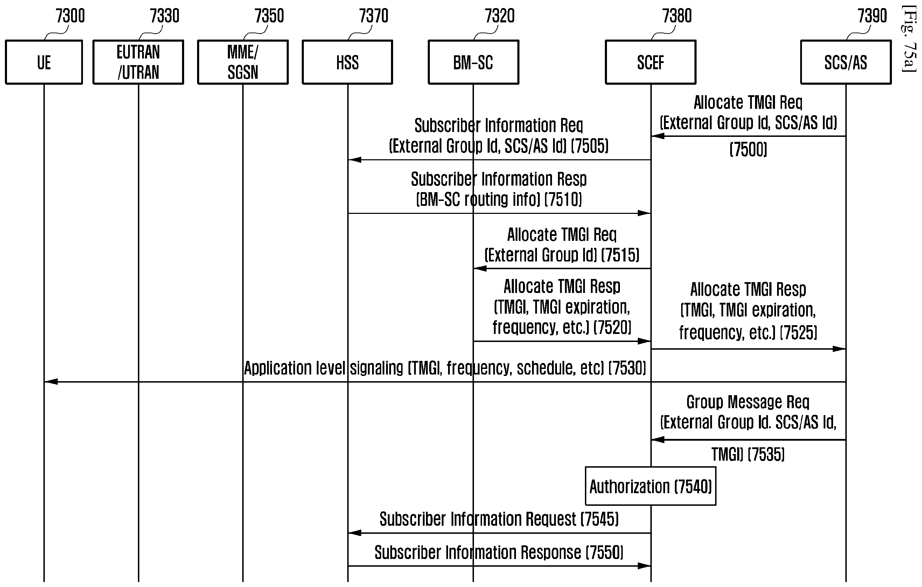

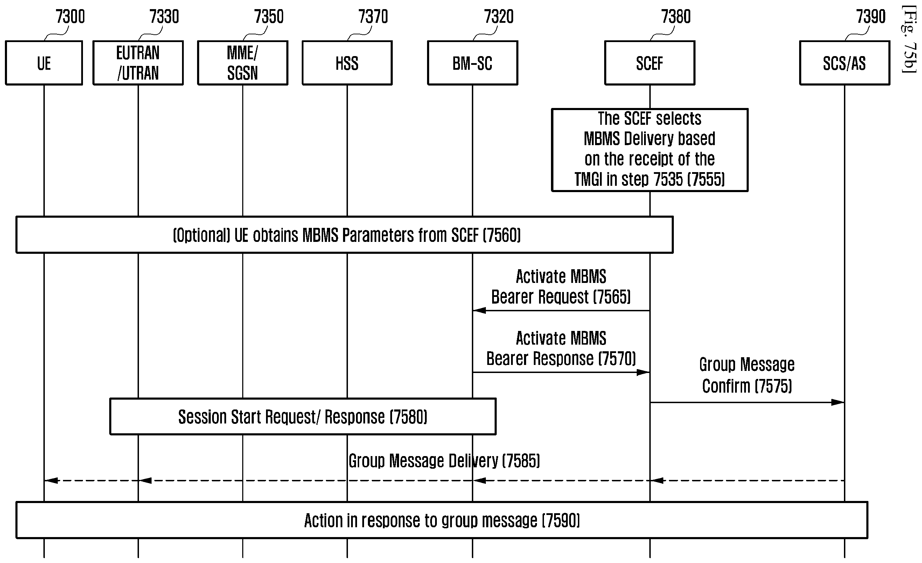

FIGS. 75A and 75B illustrate a method of activating an MBMS bearer for group message delivery and delivering a group message according to an embodiment of the present disclosure.

Referring to FIGS. 75A and 75B, operations 7500 to 7530 may correspond to operations 7420 to 7480 in FIG. 74, and a detailed description thereof will therefore not be repeated. However, this does not mean that operations 7400 and 7410 as described above should be omitted.

In operation 7535, an SCS/AS 7390 transmits a group message request message to an SCEF 7380. The group message request message may include an external group ID, an SCA/AS ID, a content to be delivered, location/area information, RAT(s) information, and/or a TMGI. To determine the IP address and/or port number of the SCEF where the group message request message is received, the SCS/AS may perform a DNS query using the external group ID, use predetermined information, or use information previously stored when the TMGI is allocated. The SCS/AS may store the external group ID and the IP address and/or port number of the SCEF. The location/area information may be a geographical information. As another example, the location/area information may include at least one cell identifier. The at least one cell identifier may be information that is generated using information received from UEs 7300.

In operation 7540, the SCEF 7380 performs authorization for group message delivery. The authorization may be performed for the SCS/AS 7390 identified by the corresponding SCS/AS ID and/or the external group identified by the corresponding external group ID. The authorization may be performed by the SCEF 7380 alone. Alternatively, the SCEF 7380 may transfer the SCS/AS ID and/or the external group ID to an HSS 7370 and /or a group management server, and the HSS 7370 and/or the group management server may perform the authorization and then inform the SCEF 7380 of the result of the authorization. This will be described in more detail in operations 7545 and 7550.

In operation 7545, the SCEF 7380 may transmit a subscriber information request message to the HSS 7370 and/or the group management server. The subscriber information request massage may include the external group ID and/or the SCS/AS ID. The HSS 7370 and/or the group management server may determine whether the corresponding SCS/AS 7390 and/or the external group is authorized to request the group message delivery.

In operation 7550, the HSS 7370 and/or the group management server may transmit a subscriber information response message. The subscriber information response message may include the result of the authorization and the cause thereof.

In operation 7555, the SCEF 7380 determines to deliver the group massage through an MBMS service.

In operation 7560, if necessary, the UE 7300 may acquire MBMS-related information. The MBMS-related information may be transmitted to the UE 7300 by the SCEF 7380, and may also be transmitted to the UE 7300 by the SCS/AS 7390.
- The SCEF 7380 may transmit the MBMS-related information after operation 7570 in this embodiment.
- The SCS/AS 7390 may have already transmitted the MBMS-related information through operation 7480/7530, and may also transmit the MBMS-related information after operation 7575.

* When the MBMS-related information is transmitted through operation 7480/7530, the SCS/AS 7390 fails to acquire information on an MBMS service area, a radio frequency, and the like in time, and thus may not include this information in the MBMS-related information.
* When the MBMS-related information is transmitted after operation 7575, the MBMS-related information may include information on the TMGI, an MBMS service area including the start and end points of the service, a radio frequency, and the like. The MBMS-related information may be transmitted after operation 7575 only when it is not transmitted through 7480/7530 or there is a change in the MBMS-related information that has been transmitted through operation 7480/7530.

In operation 7565, the SCEF 7380 may transmit an activate MBMS bearer request message to a BM-SC 7320. The activate MBMS bearer request message may include information on an MBMS service area, the TMGI, and the like. In addition, the activate MBMS bearer request message may further include at least one cell identifier. The SCEF 7380 may have acquired the MBMS service area and/o the cell identifier from the location/area information received in operation 7535. The area indicated by the MBMS service area and/or the cell identifier may be larger than the area indicated by the location/area information, and the SCEF 7380 may not need to separately derive a cell identifier when the location/area information includes at least one cell identifier. The BM-SC 7320 triggers MBMS bearer activation for MBMS downstream nodes. This will be described in more detail in operation 7580.

In operation 7570, the BM-SC 7320 transmits an activate MBMS bearer response message to the SCEF 7380.

In operation 7575, the SCEF 7380 may transmit a group message confirm message to the SCS/AS 7390. Through the group message confirm message, the SCEF 7380 may inform the SCS/AS 7390 of the result of the group message delivery request, and the group message confirm message may include information on the MBMS service area, the radio frequency, and the like. Further, if a group message content is not received in operation 7535, then the SCEF 7380 may transmit, on the message, the IP address and/ or port number where the SCEF 7380 desires to receive the group message content from the SCS/AS 7390. Alternatively, the SCEF 7380 may transmit the IP address and/or port number received in operation 7570, where the BM-SC 7320 desires to receive the group message content. In this case, the SCS/AS 7380 may transmit the group message content directly to the BM-SC 7320 without passing through the SCEF 7380.

In operation 7580, the MBMS downstream nodes including an MBMS-GW 7310, an MME 7350, and an MBMS multi-cell/multicast coordination entity (MCE) activate an MBMS bearer.

In operation 7585, if the SCS/AS 7390 has not transmitted the group message content (in the previous operation) to the SCEF 7380 or has a content to be additionally transmitted, then the SCS/AS 7390 transmits the group message content the SCEF 7380 or the BM-SC 7320. Here, the SCS/AS 7390 may use the IP address and/or port number received in operation 7575. Alternatively, the SCEF 7380 may transmit the group message content to the BM-SC 7320. The BM-SC 7320 may transfer the group message content to the MBMS downstream nodes. Finally, the group message content may be transmitted to the UE 7300. Further, in order to prevent the UEs 7300, which have received the group message content, from transmitting responses at a time, the SCS/AS 7390 may include a response time window in the group message content. The UE 7300 may transmit a response by randomly selecting a time point in the response time window.

In operation 7590, the UE 7300 may appropriately make a response. As an example, the SCS/AS 7390 may transmit appropriate application level signaling or application user data.

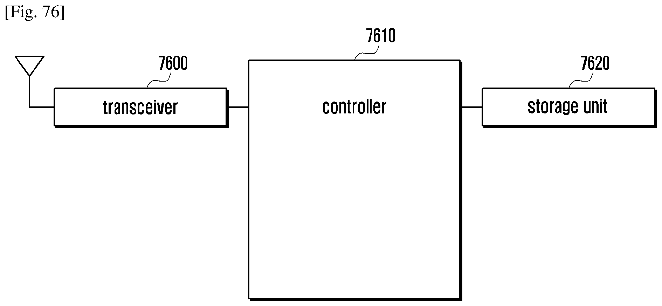

FIG. 76 is a block diagram illustrating an internal configuration of an entity according to an embodiment of the present disclosure. Specifically, the entity according to this embodiment may include an SCEF 7380, an SCS/AS 7390, a BM-SC 7320, an HSS 7370, and a UE 7300. The entity includes a transceiver unit 7600, a controller 7610, and a storage unit 7620.

Referring to FIG. 76, in particular, when the entity of this embodiment is an SCS/AS, the controller may control the transceiver unit so as to transmit a TMGI request message to an SCEF and receive a response message to the TMGI request from the SCEF.

Further, in particular, when the entity of this embodiment is an SCEF, the controller may control the transceiver unit and the storage unit so as to receive a TMGI request message from an SCS/AS, check whether the SCS/AS having transmitted the request message is authorized to request the TMGI, on the basis of the request message, transmit a subscriber information request message to an HSS, receive a response message to the subscriber information request message, including routing information, from the HSS, transmit a TMGI request message to a BM-SC, receive a response message including the TMGI, and transmit the response message including the TMGI to the SCS/AS.

In particular, when the entity of this embodiment is a UE, the controller may control the transceiver so as to receive a TMGI and other MBMS-related information through application level signaling, receive a group message using an MBMS service, and perform operations according to the group message.

Also, it will be apparent that the SCEF, the SCS/AS, the BM-SC, the HSS, and the UE may perform the operations as described with reference to FIGS. 74, 75A, and 75B, in addition to the above operations.

In an example not falling under the scope of the claims, it will be apparent that it is also possible to employ the SCEF 7380 and the SCS/AS 7390 from a point of view in which they are considered one entity. In this case, these two entities may be treated as one application server (e.g., group communication service application server).

While the present disclosure has been shown and described with reference to various embodiments thereof, it will be understood by those skilled in the art that various changes in form and details may be made therein, since the protection scope of the present invention shall be subject to the protection scope of the claims.

## Claims

1. A method of a service capability server/application server, SCS/AS, in a wireless network, the method comprising:
receiving, from a user equipment, UE, an external group identifier;
transmitting (7420), to a service capability exposure function, SCEF, entity, a first request message to request an allocation of a temporary mobile group identifier, TMGI, in case that there is no allocated TMGI for a group message delivery, the first request message including the external group identifier and an SCS/AS identifier;
receiving (7470), from the SCEF entity, a first response message including the TMGI;
transmitting (7480), to the UE, an application-level signaling including the TMGI; and
transmitting (7535), to the SCEF entity, a request message including the TMGI and the external group identifier for requesting the group message delivery.

2. The method of claim 1, wherein it is checked by the SCEF entity whether the SCS/AS is authorized to request the allocation of the TMGI.

3. A service capability server/application server, SCS/AS, for a wireless network, the apparatus comprising:
a transceiver (7600); and
a controller (7610) coupled with the transceiver and configured to:
receive, from a user equipment, UE, an external group identifier,
transmit, to a service capability exposure function, SCEF, entity, a first request message to request an allocation of a temporary mobile group identifier, TMGI, in case that there is no allocated TMGI for a group message delivery, the first request message including the external group identifier and an SCS/AS identifier,
receive, from the SCEF entity, a first response message including the TMGI,
transmit, to the UE, an application-level signaling including the TMGI, and
transmit, to the SCEF entity, a request message including the TMGI and the external group identifier for requesting the group message delivery.

4. The apparatus of claim 3, wherein it is checked by the SCEF entity whether the SCS/AS is authorized to request the allocation of the TMGI.

5. The method of claim 1 or the apparatus of claim 3, wherein:
a second request message including the external group identifier and the SCS/AS identifier is transmitted from the SCEF entity to a home subscriber server, HSS, to request subscriber information, and
a second response message including routing information for a broadcast/multicast service center, BM-SC, is transmitted from the HSS to the SCEF entity.

6. The method or the apparatus of claim 5, wherein:
a third request message including the external group identifier is transmitted from the SCEF entity to the BM-SC to request the TMGI based on the routing information, and
a third response message including the TMGI is transmitted from the BM-SC to the SCEF entity.

7. The method or the apparatus of claim 5, wherein the routing information for the BM-SC comprises at least one of a BM-SC identifier or a BM-SC internet protocol, IP, address.

8. A method of a service capability exposure function, SCEF, entity in a wireless network, the method comprising:
receiving (7420), from a service capability server/application server, SCS/AS, a first request message to request allocation of a temporary mobile group identifier, TMGI, in case that there is no allocated TMGI for a group message delivery, the first request message including an external group identifier and an SCS/AS identifier;
transmitting (7470), to the SCS/AS, a first response message including the TMGI; and
receiving (7535), from the SCS/AS, a request message including the TMGI and the external group identifier for requesting the group message delivery,
wherein the TMGI is transmitted from the SCS/AS to a user equipment, UE, on an application-level signaling (7480).

9. The method of claim 8, further comprising:
checking whether the SCS/AS is authorized to request the allocation of the TMGI.

10. The method of claim 8, further comprising:
transmitting, to a home subscriber server, HSS, a second request message including the external group identifier and the SCS/AS identifier to request subscriber information; and
receiving, from the HSS, a second response message including routing information for a broadcast/multicast service center, BM-SC,.

11. The method of claim 10, further comprising:
transmitting, to the BM-SC, a third request message including the external group identifier to request the TMGI based on the routing information; and
receiving, from the BM-SC, a third response message including the TMGI.

12. The method of claim 10, wherein the routing information for the BM-SC comprises at least one of a BM-SC identifier and a BM-SC internet protocol, IP, address.

13. An entity adapted to implement a service capability exposure function, SCEF, for a wireless network, the apparatus comprising:
a transceiver (7600); and
a controller (7610) coupled with the transceiver and configured to:
receive, from a service capability server/application server, SCS/AS, a first request message to request allocation of a temporary mobile group identifier, TMGI, in case that there is no allocated TMGI for a group message delivery, the first request message including an external group identifier and an SCS/AS identifier,
transmit, to the SCS/AS, a first response message including the TMGI, and
receive, from the SCS/AS, a request message including the TMGI and the external group identifier for requesting the group message delivery,
wherein the TMGI is transmitted from the SCS/AS to a user equipment, UE, on an application-level signaling.

14. The entity of claim 13, wherein the controller is further configured to check whether the SCS/AS is authorized to request the allocation of the TMGI.

15. The entity of claim 13, wherein the controller is further configured to:
transmit (7430), to a home subscriber server, HSS, a second request message including the external group identifier and the SCS/AS identifier to request subscriber information, and
receive (7440), from the HSS, a second response message including routing information for a broadcast/multicast service center, BM-SC.

16. The entity of claim 15, wherein the controller is further configured to:
transmit (7450), to the BM-SC, a third request message including the external group identifier to request the TMGI based on the routing information, and
receive (7460), from the BM-SC, a third response message including the TMGI.

17. The entity of claim 15, wherein the routing information for the BM-SC comprises at least one of a BM-SC identifier or a BM-SC internet protocol, IP, address.

## Patentansprüche

1. Verfahren eines Dienstfähigkeitsservers/Anwendungsservers, SCS/AS, in einem drahtlosen Netzwerk, wobei das Verfahren Folgendes umfasst:
Empfangen, von einem Benutzergerät, UE, einer externen Gruppenkennung;
Übertragen (7420), an eine Entität einer Dienstfähigkeitsexpositionsfunktion, SCEF, einer ersten Anforderungsnachricht, um eine Zuweisung einer temporären Mobilgruppenkennung, TMGI, anzufordern, falls es keine zugewiesene TMGI für eine Gruppennachrichtenzustellung gibt, wobei die erste Anforderungsnachricht die externe Gruppenkennung und eine SCS/AS-Kennung beinhaltet;
Empfangen (7470), von der SCEF-Entität, einer ersten Antwortnachricht, welche die TMGI beinhaltet;
Übertragen (7480), an das UE, einer Signalisierung auf Anwendungsebene, welche die TMGI beinhaltet; und
Übertragen (7535), an die SCEF-Entität, einer Anforderungsnachricht, welche die TMGI und die externe Gruppenkennung beinhaltet, um die Gruppennachrichtenzustellung anzufordern.

2. Verfahren nach Anspruch 1, wobei durch die SCEF-Entität überprüft wird, ob der SCS/AS berechtigt ist, die Zuweisung der TMGI anzufordern.

3. Dienstfähigkeitsserver/Anwendungsserver, SCS/AS, für ein drahtloses Netzwerk, wobei die Vorrichtung Folgendes umfasst:
einen Sendeempfänger (7600); und
eine Steuerung (7610), die mit dem Sendeempfänger gekoppelt und für Folgendes konfiguriert ist:
Empfangen, von einem Benutzergerät, UE, einer externen Gruppenkennung, Übertragen, an eine Entität einer Dienstfähigkeitsexpositionsfunktion, SCEF, einer ersten Anforderungsnachricht, um eine Zuweisung einer temporären Mobilgruppenkennung, TMGI, anzufordern, falls es keine zugewiesene TMGI für eine Gruppennachrichtenzustellung gibt, wobei die erste Anforderungsnachricht die externe Gruppenkennung und eine SCS/AS-Kennung beinhaltet,
Empfangen, von der SCEF-Entität, einer ersten Antwortnachricht, welche die TMGI beinhaltet,
Übertragen, an das UE, einer Signalisierung auf Anwendungsebene, welche die TMGI beinhaltet, und
Übertragen, an die SCEF-Entität, einer Anforderungsnachricht, welche die TMGI und die externe Gruppenkennung beinhaltet, um die Gruppennachrichtenzustellung anzufordern.

4. Vorrichtung nach Anspruch 3, wobei durch die SCEF-Entität überprüft wird, ob der SCS/AS berechtigt ist, die Zuweisung der TMGI anzufordern.

5. Verfahren nach Anspruch 1 oder Vorrichtung nach Anspruch 3, wobei:
eine zweite Anforderungsnachricht, welche die externe Gruppenkennung und die SCS/AS-Kennung beinhaltet, von der SCEF-Entität an einen Heimatteilnehmerserver, HSS, übertragen wird, um Teilnehmerinformationen anzufordern, und
eine zweite Antwortnachricht, die Routing-Informationen für ein Broadcast-/Multicast-Dienstzentrum, BM-SC, beinhaltet, von dem HSS an die SCEF-Entität übertragen wird.

6. Verfahren oder Vorrichtung nach Anspruch 5, wobei:
eine dritte Anforderungsnachricht, welche die externe Gruppenkennung beinhaltet, von der SCEF-Entität an das BM-SC übertragen wird, um die TMGI basierend auf den Routing-Informationen anzufordern, und
eine dritte Antwortnachricht, welche die TMGI beinhaltet, von dem BM-SC an die SCEF-Entität übertragen wird.

7. Verfahren oder Vorrichtung nach Anspruch 5, wobei die Routing-Informationen für das BM-SC zumindest eines von einer BM-SC-Kennung oder einer BM-SC-Internetprotokoll-IP-Adresse umfassen.

8. Verfahren einer Entität einer Dienstfähigkeitsexpositionsfunktion, SCEF, in einem drahtlosen Netzwerk, wobei das Verfahren Folgendes umfasst:
Empfangen (7420), von einem Dienstfähigkeitsserver/Anwendungsserver, SCS/AS, einer ersten Anforderungsnachricht, um Zuweisung einer temporären Mobilgruppenkennung, TMGI, anzufordern, falls es keine zugewiesene TMGI für eine Gruppennachrichtenzustellung gibt, wobei die erste Anforderungsnachricht eine externe Gruppenkennung und eine SCS/AS-Kennung beinhaltet;
Übertragen (7470), an den SCS/AS, einer ersten Antwortnachricht, welche die TMGI beinhaltet; und
Empfangen (7535), von dem SCS/AS, einer Anforderungsnachricht, welche die TMGI und die externe Gruppenkennung beinhaltet, um die Gruppennachrichtenzustellung anzufordern,
wobei die TMGI von dem SCS/AS an ein Benutzergerät, UE, auf einer Signalisierung auf Anwendungsebene (7480) übertragen wird.

9. Verfahren nach Anspruch 8, ferner umfassend:
Überprüfen, ob der SCS/AS berechtigt ist, die Zuweisung der TMGI anzufordern.

10. Verfahren nach Anspruch 8, ferner umfassend:
Übertragen, an einen Heimatteilnehmerserver, HSS, einer zweiten Anforderungsnachricht, welche die externe Gruppenkennung und die SCS/AS-Kennung beinhaltet, um Teilnehmerinformationen anzufordern; und
Empfangen, von dem HSS, einer zweiten Antwortnachricht, die Routing-Informationen für ein Broadcast-/Multicast-Dienstzentrum, BM-SC, beinhaltet,.

11. Verfahren nach Anspruch 10, ferner umfassend:
Übertragen, an das BM-SC, einer dritten Anforderungsnachricht, welche die externe Gruppenkennung beinhaltet, um die TMGI basierend auf den Routing-Informationen anzufordern; und
Empfangen, von dem BM-SC, einer dritten Antwortnachricht, welche die TMGI beinhaltet.

12. Verfahren nach Anspruch 10, wobei die Routing-Informationen für das BM-SC zumindest eines von einer BM-SC-Kennung und einer BM-SC-Internetprotokoll-IP-Adresse umfassen.

13. Entität, die ausgelegt ist, um eine Dienstfähigkeitsexpositionsfunktion, SCEF, für ein drahtloses Netzwerk zu implementieren, wobei die Vorrichtung Folgendes umfasst:
einen Sendeempfänger (7600); und
eine Steuerung (7610), die mit dem Sendeempfänger gekoppelt und für Folgendes konfiguriert ist:
Empfangen, von einem Dienstfähigkeitsserver/Anwendungsserver, SCS/AS, einer ersten Anforderungsnachricht, um Zuweisung einer temporären Mobilgruppenkennung, TMGI, anzufordern, falls es keine zugewiesene TMGI für eine Gruppennachrichtenzustellung gibt, wobei die erste Anforderungsnachricht eine externe Gruppenkennung und eine SCS/AS-Kennung beinhaltet,
Übertragen, an den SCS/AS, einer ersten Antwortnachricht, welche die TMGI beinhaltet, und
Empfangen, von dem SCS/AS, einer Anforderungsnachricht, welche die TMGI und die externe Gruppenkennung beinhaltet, um die Gruppennachrichtenzustellung anzufordern,
wobei die TMGI von dem SCS/AS an ein Benutzergerät, UE, auf einer Signalisierung auf Anwendungsebene übertragen wird.

14. Entität nach Anspruch 13, wobei die Steuerung ferner konfiguriert ist, um zu überprüfen, ob der SCS/AS berechtigt ist, die Zuweisung der TMGI anzufordern.

15. Entität nach Anspruch 13, wobei die Steuerung ferner für Folgendes konfiguriert ist:
Übertragen (7430), an einen Heimatteilnehmerserver, HSS, einer zweiten Anforderungsnachricht, welche die externe Gruppenkennung und die SCS/AS-Kennung beinhaltet, um Teilnehmerinformationen anzufordern, und
Empfangen (7440), von dem HSS, einer zweiten Antwortnachricht, die Routing-Informationen für ein Broadcast-/Multicast-Dienstzentrum, BM-SC, beinhaltet.

16. Entität nach Anspruch 15, wobei die Steuerung ferner für Folgendes konfiguriert ist:
Übertragen (7450), an das BM-SC, einer dritten Anforderungsnachricht, welche die externe Gruppenkennung beinhaltet, um die TMGI basierend auf den Routing-Informationen anzufordern, und
Empfangen (7460), von dem BM-SC, einer dritten Antwortnachricht, welche die TMGI beinhaltet.

17. Entität nach Anspruch 15, wobei die Routing-Informationen für das BM-SC zumindest eines von einer BM-SC-Kennung oder einer BM-SC-Internetprotokoll-IP-Adresse umfassen.

## Revendications

1. Procédé d'un serveur de capacité de service/serveur d'application, SCS/AS, dans un réseau sans fil, le procédé comprenant :
la réception, en provenance d'un équipement utilisateur, UE, d'un identifiant de groupe externe ;
la transmission (7420), à une entité de fonction d'exposition de capacité de service, SCEF, d'un premier message de demande pour demander une attribution d'un identifiant de groupe mobile temporaire, TMGI, dans le cas où il n'existe pas de TMGI attribué pour une délivrance de message de groupe, le premier message de demande comprenant l'identifiant de groupe externe et un identifiant SCS/AS ;
la réception (7470), en provenance de l'entité SCEF, d'un premier message de réponse comprenant le TMGI ;
la transmission (7480), à l'UE, d'une signalisation de niveau application comprenant le TMGI ; et
la transmission (7535), à l'entité SCEF, d'un message de demande comprenant le TMGI et l'identifiant de groupe externe pour demander la délivrance du message de groupe.

2. Procédé selon la revendication 1, dans lequel il est vérifié par l'entité SCEF si le SCS/AS est autorisé à demander l'attribution du TMGI.

3. Serveur de capacité de service/serveur d'application, SCS/AS, pour un réseau sans fil, l'appareil comprenant :
un émetteur-récepteur (7600) ; et
un contrôleur (7610) couplé à l'émetteur-récepteur et configuré pour :
recevoir, en provenance d'un équipement utilisateur, UE, un identifiant de groupe externe, transmettre, à une entité de fonction d'exposition de capacité de service, SCEF, un premier message de demande pour demander une attribution d'un identifiant de groupe mobile temporaire, TMGI, dans le cas où il n'existe pas de TMGI attribué pour une délivrance de message de groupe, le premier message de demande comprenant l'identifiant de groupe externe et un identifiant SCS/AS,
recevoir, en provenance de l'entité SCEF, un premier message de réponse comprenant le TMGI,
transmettre, à l'UE, une signalisation de niveau application comprenant le TMGI, et
transmettre, à l'entité SCEF, un message de demande comprenant le TMGI et l'identifiant de groupe externe pour demander la délivrance du message de groupe.

4. Appareil selon la revendication 3, dans lequel il est vérifié par l'entité SCEF si le SCS/AS est autorisé à demander l'attribution du TMGI.

5. Procédé selon la revendication 1 ou appareil selon la revendication 3, dans lequel :
un deuxième message de demande comprenant l'identifiant de groupe externe et l'identifiant SCS/AS est transmis de l'entité SCEF à un serveur d'abonné domestique, HSS, pour demander des informations d'abonné, et
un deuxième message de réponse comprenant des informations de routage pour un centre de service de diffusion/multidiffusion, BM-SC, est transmis du HSS à l'entité SCEF.

6. Procédé ou appareil selon la revendication 5, dans lequel :
un troisième message de demande comprenant l'identifiant de groupe externe est transmis de l'entité SCEF au BM-SC pour demander le TMGI sur la base des informations de routage, et
un troisième message de réponse comprenant le TMGI est transmis du BM-SC à l'entité SCEF.

7. Procédé ou appareil selon la revendication 5, dans lequel les informations de routage pour le BM-SC comprennent au moins l'un d'un identifiant du BM-SC ou d'une adresse de protocole Internet, IP, du BM-SC.

8. Procédé d'une entité de fonction d'exposition de capacité de service, SCEF, dans un réseau sans fil, le procédé comprenant :
la réception (7420), en provenance d'un serveur de capacité de service/serveur d'application, SCS/AS, d'un premier message de demande pour demander l'attribution d'un identifiant de groupe mobile temporaire, TMGI, dans le cas où il n'existe pas de TMGI attribué pour une délivrance de message de groupe, le premier message de demande comprenant un identifiant de groupe externe et un identifiant SCS/AS ;
la transmission (7470), au SCS/AS, d'un premier message de réponse comprenant le TMGI ; et
la réception (7535), en provenance du SCS/AS, d'un message de demande comprenant le TMGI et l'identifiant de groupe externe pour demander la délivrance du message de groupe,
dans lequel le TMGI est transmis du SCS/AS à un équipement utilisateur, UE, sur une signalisation de niveau application (7480).

9. Procédé selon la revendication 8, comprenant en outre :
la vérification si le SCS/AS est autorisé à demander l'attribution du TMGI.

10. Procédé selon la revendication 8, comprenant en outre :
la transmission, à un serveur d'abonné domestique, HSS, d'un deuxième message de demande comprenant l'identifiant de groupe externe et l'identifiant SCS/AS pour demander des informations d'abonné ; et
la réception, en provenance du HSS, d'un deuxième message de réponse comprenant des informations de routage pour un centre de service de diffusion/multidiffusion, BM-SC,.

11. Procédé selon la revendication 10, comprenant en outre :
la transmission, au BM-SC, d'un troisième message de demande comprenant l'identifiant de groupe externe pour demander le TMGI sur la base des informations de routage ; et
la réception, en provenance du BM-SC, d'un troisième message de réponse comprenant le TMGI.

12. Procédé selon la revendication 10, dans lequel les informations de routage pour le BM-SC comprennent au moins l'un d'un identifiant du BM-SC et d'une adresse de protocole Internet, IP, du BM-SC.

13. Entité adaptée pour mettre en œuvre une fonction d'exposition de capacité de service, SCEF, pour un réseau sans fil, l'appareil comprenant :
un émetteur-récepteur (7600) ; et
un contrôleur (7610) couplé à l'émetteur-récepteur et configuré pour :
recevoir, en provenance d'un serveur de capacité de service/serveur d'application, SCS/AS, un premier message de demande pour demander l'attribution d'un identifiant de groupe mobile temporaire, TMGI, dans le cas où il n'existe pas de TMGI attribué pour une délivrance de message de groupe, le premier message de demande comprenant un identifiant de groupe externe et un identifiant SCS/AS,
transmettre, au SCS/AS, un premier message de réponse comprenant le TMGI, et
recevoir, en provenance du SCS/AS, un message de demande comprenant le TMGI et l'identifiant de groupe externe pour demander la délivrance du message de groupe,
dans lequel le TMGI est transmis du SCS/AS à un équipement utilisateur, UE, sur une signalisation de niveau application.

14. Entité selon la revendication 13, dans laquelle le contrôleur est en outre configuré pour vérifier si le SCS/AS est autorisé à demander l'attribution du TMGI.

15. Entité selon la revendication 13, dans laquelle le contrôleur est en outre configuré pour :
transmettre (7430), à un serveur d'abonné domestique, HSS, un deuxième message de demande comprenant l'identifiant de groupe externe et l'identifiant du SCS/AS pour demander des informations d'abonné, et
recevoir (7440), en provenance du HSS, un deuxième message de réponse comprenant des informations de routage pour un centre de service de diffusion/multidiffusion, BM-SC.

16. Entité selon la revendication 15, dans laquelle le contrôleur est en outre configuré pour :
transmettre (7450), au BM-SC, un troisième message de demande comprenant l'identifiant de groupe externe pour demander le TMGI sur la base des informations de routage, et
recevoir (7460), en provenance du BM-SC, un troisième message de réponse comprenant le TMGI.

17. Entité selon la revendication 15, dans laquelle les informations de routage pour le BM-SC comprennent au moins l'un d'un identifiant du BM-SC ou d'une adresse de protocole Internet, IP, du BM-SC.
